Europäisches Patentamt

European Patent Office

Office européen des brevets

(19)

(11) Numéro de publication : **0 448 515 A1**

# (12) DEMANDE DE BREVET EUROPEEN

(21) Numéro de dépôt : 91810165.0

(22) Date de dépôt : 13.03.91

(51) Int. Cl.⁵ : **H02K 26/00, H02K 37/24, H02K 7/06**

(30) Priorité : 23.03.90 CH 974/90

(43) Date de publication de la demande :
**25.09.91 Bulletin 91/39**

(84) Etats contractants désignés :
**CH DE ES FR GB IT LI**

(71) Demandeur : **Société industrielle de Sonceboz S.A.**
**CH-2605 Sonceboz (Berne) (CH)**

(72) Inventeur : **Pfister, Jean-François**
**Rue du Soleil 10**
**CH-2605 Sonceboz (CH)**

(74) Mandataire : **Fischer, Franz Josef et al**
**BOVARD SA Ingénieurs-Conseils ACP**
**Optingenstrasse 16**
**CH-3000 Bern 25 (CH)**

(54) **Actuateur linéaire.**

(57)      L'actuateur linéaire est constitué d'un moteur électrique (13,20), d'un système (4) de déplacement d'une tige (42) et d'un dispositif de rappel (3).

Pour toute position angulaire donnée du rotor (20), le système de déplacement d'une tige impose une position axiale longitudinale à une tige pouvant actionner une commande quelconque. Cette transmission de mouvement est assurée par une liaison vis-écrou (43, 45) ainsi que par une liaison à clavette (41,44a).

Le dispositif de rappel, constitué d'une lame de ressort spiral (30) dont une extrémité est solidaire du bâti (10) alors que l'autre extrémité est fixée au rotor, permet de ramener le rotor, respectivement la tige mobile, en une position de départ en cas de disparition de la tension d'alimentation.

Un tel dispositif est apte à commander un organe tel qu'une vanne, une soupape ou un clapet de ventilation devant impérativement revenir à une position déterminée en cas de disparition de la tension, en cas d'incendie par exemple.

EP 0 448 515 A1

## ACTUATEUR LINEAIRE

La présente invention concerne un actuateur linéaire constitué d'un moteur électrique rotatif, d'une tige mobile en translation, de moyens de transmission de mouvement et de moyens de rappel en une position de départ de ladite tige mobile lorsque le moteur n'est plus alimenté par une tension électrique.

Des actuateurs linéaires de ce type sont utilisés dans un grand nombre d'applications, en particulier dans des commandes de sécurité où l'élément actionné par le moteur, qui peut être par exemple une vanne, une soupape ou un clapet de ventilation, doit revenir impérativement en une position prédéterminée en cas de disparition de la tension d'alimentation, en cas d'incendie par exemple.

Différents dispositifs ont été proposés à cet effet jusqu'ici; que ces dispositifs soient de type électromagnétique ou mécanique, ils sont généralement disposés sur le réducteur qui suit le moteur et sont en conséquence encombrants et de construction compliquée.

Un autre dispositif est décrit dans le brevet US-A-3,539,846 où un moteur électrique, muni d'un dispositif de rappel à ressort, actionne une aiguille indicatrice fixée au rotor; la faible énergie emmagasinée dans le ressort de rappel permet de ramener l'aiguille à sa position de départ en cas de chute de tension, mais serait incapable d'actionner un élément mécanique opposant un certain couple de résistance.

Le brevet US-A-4,764,696 propose un actuateur linéaire où le mouvement longitudinal d'une tige est provoqué par la rotation du rotor d'un moteur. Ce dispositif ne permet pas un retour de la tige en une position de départ en cas de chute de la tension d'alimentation du moteur. D'autre part, le mouvement de la tige étant uniquement longitudinal, la conception du joint disposé entre le bâti et ladite tige est plus compliquée.

Afin de remédier à ces inconvénients, l'actuateur linéaire selon l'invention est constitué d'un moteur électrique, pouvant être un moteur pas-à-pas, dont le stator est solidaire du bâti et dont le rotor entraîne des moyens de transmission de mouvement à une tige mobile en translation et en rotation, de telle manière qu'à chaque position angulaire du rotor corresponde une position axiale de la tige, indépendante de la force de résistance exercée sur ladite tige, ainsi que d'un dispositif de rappel de construction compacte et simple, constitué d'un élément élastiquement flexible, disposé entre le rotor et le stator ou le bâti, et capable d'emmagasiner une énergie de rappel variable en fonction de la position angulaire du rotor, mais suffisante pour que, en l'absence de tension d'alimentation sur le moteur, l'énergie de rappel se transmette aux moyens de transmission de mouvement afin de ramener la tige mobile en une position de départ ou de fin de course. Ce dispositif étant mécanique, son fonctionnement est absolument indépendant de toutes sources d'énergie extérieures et garantit donc un mouvement de rappel fiable du rotor, respectivement de la tige mobile entraînée par le rotor, en cas de chute de la tension d'alimentation.

Dans ce but, l'actuateur linéaire selon l'invention possède les caractéristiques mentionnées dans les revendications.

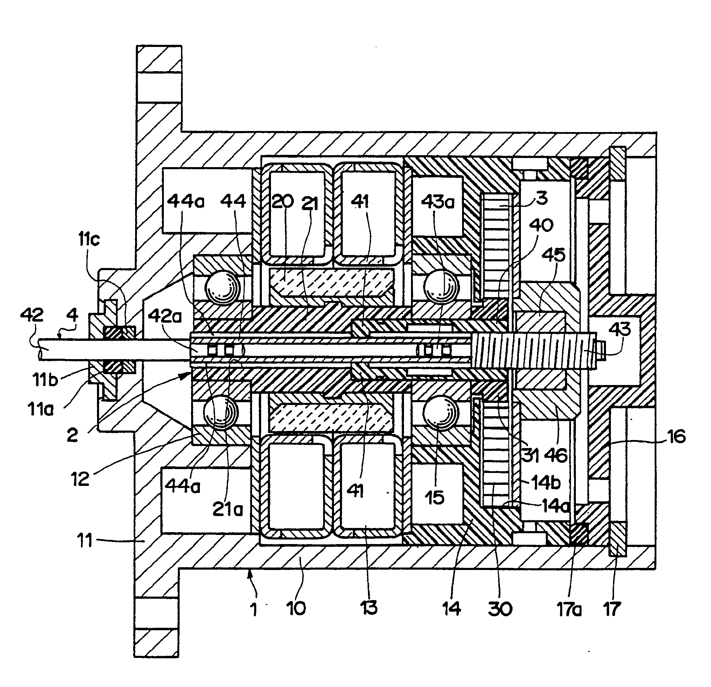

Le dessin comportant une figure unique, représentant une coupe axiale du dispositif, permet de comprendre de façon explicite le fonctionnement d'un actuateur linéaire selon l'invention,

La forme d'exécution préférentielle de l'actuateur linéaire selon l'invention comprend une partie fixe ou bâti 1, une partie de rotor mobile en rotation 2, un dispositif de rappel 3 et un système 4 de déplacement d'une tige mobile.

La partie fixe 1 du dispositif comporte un bâti 10 en forme de boîtier cylindrique dont le fond 11 présente un élargissement en forme de bride permettant la fixation du bâti sur un élément quelconque. A l'intérieur du bâti 10 sont fixés premièrement un palier intérieur 12, destiné à supporter le rotor, comme on le verra plus loin, d'autre part le stator 13 du moteur et troisièmement un support intermédiaire 14 en forme de disque, qui supporte lui-même un second palier 15 du moteur. Ce support intermédiaire 14 présente sur sa face tournée vers l'extérieur un logement cylindrique plat 14a qui joue le rôle d'une cage et qui est fermé par un couvercle 14b. Enfin, un fond 16, également engagé dans la paroi latérale cylindrique du bâti 10 et retenu par un anneau élastique 17, ferme le dispositif vers l'arrière. Il presse les différents éléments des parties fixes du dispositif les unes contre les autres par l'intermédiaire d'une garniture élastique 17a.

La partie de rotor mobile en rotation 2 comprend tout d'abord le rotor 20, supporté par un corps allongé 21 de forme tubulaire, comportant un alésage interne cylindrique 21a. Ce corps tubulaire 21 comporte à l'une de ses extrémités un prolongement qui est engagé dans le palier 12. A son autre extrémité, le corps tubulaire 21 est relié à un embout 40, également tubulaire, faisant partie du système 4 de déplacement d'une tige mobile, chassé ou engagé de force dans un élargissement de l'alésage 21a et qui présente une partie cylindrique engagée à l'intérieur du palier 15. Le cas échéant, le corps tubulaire 21 et l'embout 40 pourraient être moulés ou injectés d'une seule pièce.

La structure du moteur, constitué par le stator 13 et le rotor 20, ne joue pas un rôle déterminant dans la construction décrite. Ce moteur doit cependant satisfaire à certaines exigences: il faut qu'il puisse être lié à un dispositif de commande qui permette d'imposer au rotor 20, et par conséquent au système 4 de déplacement d'une tige, des positions successives prescrites en fonction du temps, et cela indépendamment de la force ou du couple pouvant s'exercer sur ladite tige ou sur le rotor, et notamment indépendamment du couple imposé par le dispositif de rappel 3, dont le fonctionnement est expliqué plus loin. Par exemple, le moteur peut être du type pas-à-pas, de l'un parmi le très grand nombre de types connus.

Le système 4 de déplacement d'une tige est constitué de trois éléments, premièrement d'une tige cylindrique 42 qui sera reliée à un organe mobile qu'elle devra actionner par un mouvement axial longitudinal, ledit organe mobile n'étant pas représenté ici; cette tige 42 traverse le fond 11 du bâti 10 à travers un dispositif d'étanchéité comportant un joint annulaire 11a, qui peut être un joint torique ou un joint profilé, et qui est maintenu en place par une bague sertie 11b appuyant le joint 11a contre un siège annulaire 11c.

A son autre extrémité, le système 4 de déplacement d'une tige est constitué d'un élément de vis 43. La tige 42 et l'élément de vis 43 sont pourvus chacun d'un embout cannelé 42a et 43a qui sont engagés l'un et l'autre dans les deux extrémités d'une pièce intermédiaire 44 en forme de douille dont la surface externe cylindrique est ajustée à l'alésage 21a du corps tubulaire 21 supportant le rotor 20, de façon à pouvoir coulisser à l'intérieur de cet alésage. Comme on le voit au dessin, la douille 44 présente deux gorges latérales 44a qui sont diamétralement opposées et dans chacune desquelles est engagé un plot saillant en forme de clavette 41 solidaire de l'embout 40. Par ailleurs, cet embout 40 présente un alésage interne de même diamètre que l'alésage 21a et qui, par conséquent, peut coulisser sur la surface cylindrique externe de la douille 44 et sur l'extrémité de l'élément fileté 43 qui est ajusté au même diamètre.

Ainsi, le système 4 de déplacement d'une tige 42 est solidaire du rotor 20 en rotation, mais peut coulisser longitudinalement selon l'axe de ce rotor.

Le couvercle 14b qui ferme vers l'extérieur la cage 14a porte encore un écrou 45, tenu en place par une douille de fixation 46, et dont le taraudage correspond au filetage de l'élément 43. Du fait de cette liaison vis-écrou entre le système 4 de déplacement d'une tige 42 et la partie fixe 1, on se rend compte que toute rotation due au rotor 20 entraîne un déplacement axial de la tige 42, combiné à un mouvement de rotation de ladite tige. En cas de nécessité, un découplage de ces deux mouvements peut être prévu, d'une manière quelconque connue de la technique, sur une partie externe (non représentée) de la tige 42.

Le dispositif de rappel 3 est constitué d'un ressort spiral 30, dont l'extrémité extérieure est liée à la face interne du logement 14a et l'extrémité extérieure à un crochet 31, analogue à la bonde des barillets de pièces d'horlogerie mécanique et fixé sur une portée cylindrique de l'embout 40 qui traverse le logement 14a. Ce ressort spiral 30 est d'une construction semblable au ressort moteur des pièces d'horlogerie, c'est-à-dire qu'il peut emmagasiner une énergie suffisante pour imprimer au rotor 20, une rotation d'un nombre de tours prédéterminé, et cela sous un couple qui pratiquement peut être relativement constant pendant la plus grande partie des mouvements de rotation. Afin d'assurer le bon fonctionnement du système, il est nécessaire que le couple d'immobilisation ou d'entraînement exercé sur le rotor 20 soit en tout temps supérieur au couple exercé par le ressort 30 sur l'embout 40; par contre, pour assurer le retour du rotor à sa position initiale en cas de panne de courant, il est nécessaire que le couple de rétention du moteur et de l'équipement qui lui est accouplé soit inférieur au couple exercé par le ressort 30, afin que ce dernier puisse imprimer au rotor 20 le nombre de tours nécessaires afin de le ramener à sa position initiale en cas d'absence de tension, respectivement de ramener la tige 42 à sa position de départ ou de fin de course.

Vu qu'il n'est pas possible d'envisager un dispositif de rappel à ressort dont la précision de fonctionnement soit telle que le rotor soit ramené exactement à sa position initiale, ceci indépendamment du déplacement angulaire qui a été imprimé au moteur et de la charge, éventuellement variable, qui lui est accouplée, les caractéristiques du ressort de rappel seront telles que le rotor sera toujours ramené à sa position initiale en cas d'absence de tension d'alimentation, l'arrêt du rotor en cette position initiale étant déterminé par un dispositif de fin de course mécanique disposé sur le réducteur et non représenté ici.

Grâce au dispositif de rappel 3, dont le fonctionnement a été décrit auparavant, un actuateur linéaire selon cette forme d'exécution peut actionner, par exemple, une commande de vanne ou de soupape d'un circuit de sécurité, dont la fermeture ou l'ouverture doit être impérativement commandée en cas de panne de courant. Selon la forme d'exécution préférentielle décrite, ce dispositif de rappel est incorporé dans le bâti du moteur électrique; il serait tout à fait envisageable de prévoir cet élément de rappel sous une forme détachée, qu'il serait possible de rajouter à un actuateur linéaire conventionnel en le fixant d'un côté à l'extérieur du bâti et de l'autre côté à l'axe de rotation du moteur dudit actuateur linéaire.

Ainsi, l'actuateur linéaire selon l'invention est apte à faire prendre à un élément commandé n'importe quelle position longitudinale commandée par une position angulaire correspondante du rotor, cet élément commandé revenant en une position de départ ou de fin de course en cas de disparition de la tension d'alimentation, ceci avec toute la fiabilité voulue, de par la construction mécanique simple du dispositif.

## Revendications

1. Actuateur linéaire constitué d'un moteur électrique rotatif comprenant un stator (13) solidaire d'un bâti (10) et un rotor (20), d'un système (4) de déplacement d'une tige (42) mobile en translation entre deux positions extrêmes, et de moyens de transmission de mouvement (41,44,43,45) associés d'une part audit moteur électrique et d'autre part à ladite tige mobile, lesdits moyens de transmission de mouvement étant agencés pour que les positions axiales successives de la tige représentent une fonction mathématique des positions angulaires du rotor, caractérisé en ce que le moteur est agencé et commandé de manière que, étant sous tension, il impose au rotor des positions angulaires successives prescrites, indépendamment du couple s'exerçant sur le rotor, et en ce qu'un élément élastiquement flexible (30) est disposé entre le rotor et le bâti ou le stator, cet élément étant capable de contenir une énergie de rappel variable en fonction de ladite position angulaire du rotor et suffisante pour que, en l'absence de tension sur le moteur, l'énergie de rappel se transmette par ledit rotor auxdits moyens de transmission de mouvement afin de ramener ladite tige mobile en une position axiale correspondant à une position de départ.

2. Actuateur linéaire selon la revendication 1, caractérisé en ce que ledit élément élastiquement flexible est un ressort spiral dont l'une des extrémités est solidaire du rotor et dont l'autre extrémité est liée au stator ou au bâti.

3. Actuateur linéaire selon la revendication 2, caractérisé en ce que ledit élément flexible est agencé de façon à exercer sur le rotor un couple qui, dans ladite position de départ, est supérieur au couple de rétention du moteur en l'absence de tension.

4. Actuateur linéaire selon la revendication 2, caractérisé en ce que le couple exercé par le stator sur le rotor, quand le moteur est sous tension, est en tout temps supérieur au couple maximum exercé par ledit élément élastique sur le rotor.

5. Actuateur linéaire selon la revendication 1, caractérisé en ce que ledit système de déplacement d'une tige mobile est constitué d'un segment de vis (43), d'un segment de tige d'actionnement (42) et d'une douille de liaison (44), le segment de vis et le segment de barre présentant à l'une de leurs extrémités des embouts chassés dans les extrémités de la douille.

6. Actuateur linéaire selon la revendication 1, caractérisé en ce que lesdits moyens de transmission de mouvement comprennent une liaison à clavette (41, 44a) entre la douille et le rotor ainsi qu'une liaison à vis et écrou (43,45) entre le stator ou le bâti et le système de déplacement de la tige mobile.

7. Actuateur linéaire selon les revendications 5 et 6, caractérisé en ce que ledit segment de vis dudit système de déplacement de la tige mobile est supporté par ledit écrou, une portion de ladite tige mobile étant supportée par un joint d'étanchéité (11) à anneau torique fixe.

8. Actuateur linéaire selon les revendications 5 et 6, caractérisé en ce que la douille présente dans sa face cylindrique externe une gorge longitudinale (44a) s'étendant sur toute sa longueur et dans laquelle est engagé un élément saillant (41) jouant le rôle de clavette et aménagé sur une surface interne d'alésage du rotor.

9. Actuateur linéaire selon la revendication 1, caractérisé en ce qu'une butée mécanique, disposée sur un réducteur solidaire du rotor, détermine ladite position angulaire de départ du rotor, respectivement ladite position de départ de la tige mobile.

10. Actuateur linéaire selon l'une des revendications précédentes, caractérisé en ce que le moteur électrique est un moteur pas-à-pas.

**Office européen
des brevets**

# RAPPORT DE RECHERCHE EUROPEENNE

Numéro de la demande

EP    91 81 0165

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y,D | US-A-3539846 (R.G.JEWELL)<br>* colonne 2, lignes 34 – 61 *<br>* colonne 4, lignes 62 – 70 *<br>* colonne 5, lignes 31 – 34; figures 1, 5 * | 1-4, 10 | H02K26/00<br>H02K37/24<br>H02K7/06 |
| A |  | 9 | |
|  | --- | | |
| Y,D | US-A-4764696 (FUKAYA)<br>* colonne 1, ligne 63 – colonne 2, ligne 49; figures 1, 2 * | 1-4, 10 | |
| A |  | 5, 6, 9 | |
|  | --- | | |
| A | EP-A-0342733 (ECONOCRUISE)<br>* colonne 3, ligne 34 – colonne 5, ligne 7; figures 1-7 * | 1-4 | |
|  | --- | | |
| A | US-A-3644763 (A.SKROBISCH)<br>* colonne 3, lignes 13 – 20; figures 6, 7 * | 1-4 | |
|  | --- | | |
| A | US-A-2801352 (D.E.LIPFERT)<br>* colonne 6, lignes 52 – 60; figures 3, 7, 8 * | 1-4 | |
|  | ----- | | **DOMAINES TECHNIQUES RECHERCHES (Int. Cl.5 )**<br><br>H02K<br>F16H |

Le présent rapport a été établi pour toutes les revendications

| Lieu de la recherche | Date d'achèvement de la recherche | Examinateur |
|---|---|---|
| LA HAYE | 02 JUILLET 1991 | ZANICHELLI F. |

**CATEGORIE DES DOCUMENTS CITES**

X : particulièrement pertinent à lui seul
Y : particulièrement pertinent en combinaison avec un
  autre document de la même catégorie
A : arrière-plan technologique
O : divulgation non-écrite
P : document intercalaire

T : théorie ou principe à la base de l'invention
E : document de brevet antérieur, mais publié à la
  date de dépôt ou après cette date
D : cité dans la demande
L : cité pour d'autres raisons

& : membre de la même famille, document correspondant

EPO FORM 1503 03.82 (P0402)